# EUROPÄISCHE PATENTANMELDUNG

(11) **EP 2 485 067 A2**
(43) Veröffentlichungstag der Anmeldung: **08.08.2012**
(21) Anmeldenummer: 11192979.0
(22) Anmeldetag: 12.12.2011
(51) Int. Cl.: G01S 19/08

(54) **Verfahren zur Überprüfung der Richtigkeit von Ephemeridendaten eines Satelliten**

(30) Priorität: 02.02.2011 DE 102011010032
(71) Anmelder: Deutsches Zentrum für Luft- und Raumfahrt e.V., 51147 Köln (DE)
(72) Erfinder: Dautermann, Thomas, 82205 Gilching (DE)
(74) Vertreter: von Kreisler Selting Werner

(57) **Zusammenfassung**

Die Erfindung betrifft ein Verfahren zur Überprüfung der Richtigkeit von Ephemeridendaten eines Satelliten und umfasst die folgenden Schritte:
- Übermitteln der Ephemeridendaten von dem Satelliten (10) an einen Satellitenempfänger (12),
- Messen der Dopplerverschiebung des eingehenden Satellitensignals durch den Satellitenempfänger (12) und
- Überprüfen der Richtigkeit der vom Satelliten (10) übermittelten Ephemeridendaten durch Vergleich mit einer anhand der Dopplerverschiebung ermittelten Geschwindigkeit des Satelliten (10).

## Beschreibung

Die Erfindung betrifft ein Verfahren zur Überprüfung der Richtigkeit von Ephemeridendaten eines Satelliten.

Es existieren Anwendungen, in denen Ortskoordinaten eines Objekts mit einer sehr hohen Genauigkeit bestimmt werden müssen. Teilweise reicht hierzu die Genauigkeit des normalen GPS nicht aus. Dies ist beispielsweise bei der Durchführung von automatischen Landeanflügen von Flugzeugen der Fall.

Hierzu können beispielsweise bodengeschützte Augmentierungssysteme für GNSS-Navigation (GBAS: Ground Based Augmentation System) basierend auf Einfrequenz-Laufzeitmessungen verwendet werden. Derartige Systeme werden gegenwärtig für Kategorie 1 Instrumentenflüge bis 200 Fuß Entscheidungshöhe zertifiziert und sollen in Richtung automatische Landungen ohne Außensichtanforderungen (Kategorie 3c) weiterentwickelt werden. Die Entfernungsmessungen zum Satelliten und Kenntnis der Position des Satelliten bilden hierbei die Grundlage der Positionierungsalgorithmen. Hierzu werden dem Nutzer vom System via Navigation Data Message die Positionen der Satelliten in Form von Kepplerschen Ephemeridenparametern oder Ephemeridendaten zur Verfügung gestellt. Eine fehlerhafte Satellitenposition oder ein fehlerhafter Datensatz verursacht einen Fehler in der Positionsbestimmung.

Das Satellitenpositionierungssystem GPS basiert auf Laufzeitmessungen der Signale zwischen Satellit und Empfänger. Um die Nutzerposition bestimmen zu können, werden unter anderem die Positionskoordinaten und Uhrenfehler aller Satelliten benötigt, deren Signal der Nutzer empfängt. Hierzu werden gegenwärtig die Ephemeridenparameter seitens der Satelliten an die Empfänger übermittelt. Dies bedeutet, dass jeder Satellit in seinem Signal auch eine Navigationsnachricht aussendet, in der 16 erweiterte Keppler Parameter (Kepplerelemente) enthalten sind. Mit Hilfe dieser Parameter kann die Position des Satelliten genau berechnet werden. Die Parameter werden vom GPS Kontrollsegment bestimmt und täglich per Datenlink an die einzelnen Satelliten übermittelt. Es findet keine für den Nutzer sichtbare Integritätskontrolle der Parameter statt. Für sicherheitskritische Anwendungen wie beispielsweise die automatische Landung von Flugzeugen mit GBAS ist dies jedoch von höchster Bedeutung, da ein Fehler in der Satellitenposition einen Positionsfehler nach sich ziehen kann, der mitunter große Gefahren für den Nutzer bedeuten kann.

Es ist bekannt, Ephemeridendaten basierend auf alten Ephemeridendaten zu validieren (YE-TE Monitor). Dies bedeutet, dass, sobald ein neues Set der 16 Parameter vorliegt, die Position des Satelliten aus diesen Parametern mit der anhand der vorherigen Parameter berechneten Position verglichen und verifiziert wird.

Problematisch hierbei ist einerseits, dass bei der Initialisierung des Systems noch keine alten Ephemeridendaten vorhanden sind, mit denen die neuen validiert werden können. Weiterhin versagt die beschriebene Methode, wenn der Satellit seinen Orbit unkontrolliert verlässt und/oder keine neuen Parameter aufgespielt werden. Es kann somit lediglich die Orbitparameterberechnung des Kontrollsystems überprüft werden.

Eine absolute Bestimmung der Orbitalposition ist aufgrund von numerischen Singularitäten aufgrund der kurzen Entfernung zwischen den GBAS-Bodenempfängern nicht möglich.

Externe Daten können in der Luftfahrt aus Sicherheitsgründen nicht verwendet werden.

Aufgabe der Erfindung ist es, ein verbessertes Verfahren zur Überprüfung der Richtigkeit von Ephemeridendaten eines Satelliten bereit zu stellen.

Die Lösung der Aufgabe erfolgt erfindungsgemäß durch die Merkmale des Anspruchs 1.

Bei dem erfindungsgemäßen Verfahren werden zunächst die Ephemeridendaten von dem oder den Satelliten an einen Satellitenempfänger übermittelt. Anschließend wird die Dopplerverschiebung des eingehenden Satellitensignals durch den Satellitenempfänger gemessen. Die Richtigkeit der vom Satelliten übermittelten Ephemeridendaten wird durch Vergleich mit einer anhand der Dopplerverschiebung ermittelten Geschwindigkeit des Satelliten überprüft.

Erfindungsgemäß ist es somit möglich, anhand der Dopplerverschiebung eine Aussage über die Geschwindigkeit des Satelliten zu treffen. Eine Überprüfung der Richtigkeit der Ephemeridendaten ist somit auch bei der Initialisierung des Systems möglich. Erfindungsgemäß wurde somit der Algorithmus, mit dem aus den Kepplerelementen die Position des Satelliten berechnet wird, um eine Berechnung des theoretischen Dopplers erweitert.

Die Messung der Dopplerverschiebung des eingehenden Satellitensignals wird bei bisher bekannten Verfahren in der Regel nicht weiter verwendet und als Abfallprodukt verworfen. Erfindungsgemäß ist es somit möglich, die Geschwindigkeit des Satelliten basierend auf Messungen zu validieren, während bisher lediglich vom Kontrollsegment festgelegte Parameter verglichen wurden.

Es ist bevorzugt, dass mehrere Satellitenempfänger die Ephemeridendaten des oder der Satelliten empfangen und jeder der Satellitenempfänger anhand der durch ihn gemessenen Dopplerverschiebung die Richtigkeit der empfangenen Ephemeridendaten überprüft.

Die Überprüfung der Richtigkeit der empfangenen Ephemeridendaten kann bei jeder erneuten Übermittlung der Ephemeridendaten erneut durchgeführt werden.

Bevorzugt sind der oder die Satellitenempfänger eine oder mehrere GBAS-Bodenstationen.

Weiterhin ist es bevorzugt, dass die Position des oder der Satellitenempfänger genau bekannt ist. Dies ist bei GBAS-Bodenstationen der Fall, da sie zur Durchführung des DGPS-Verfahrens verwendet werden.

Die Erfindung betrifft ferner eine Verwendung des beschriebenen Verfahrens zur automatischen Landung eines Flugzeuges. Hierbei berechnen GBAS-Bodenstationen für jeden Satelliten die Abweichung des von diesem Satelliten empfangenen Positionssignals von der bekannten, tatsächlichen Position der GBAS-Bodenstation. Die Richtigkeit der von jedem Satelliten empfangenen Ephemeridendaten wird durch jede GBAS-Bodenstation gemäß dem vorliegend beschriebenen Verfahren überprüft.

Im Folgenden werden bevorzugte Ausführungsformen der Erfindung anhand von Figuren erläutert.

Es zeigen:
- Fig. 1:: Eine schematische Darstellung der Abläufe des erfindungsgemäßen Verfahrens.
- Fign. 2a, 2b:: Messergebnisse, die unter Anwendung des erfindungsgemäßen Verfahrens ermittelt wurde.

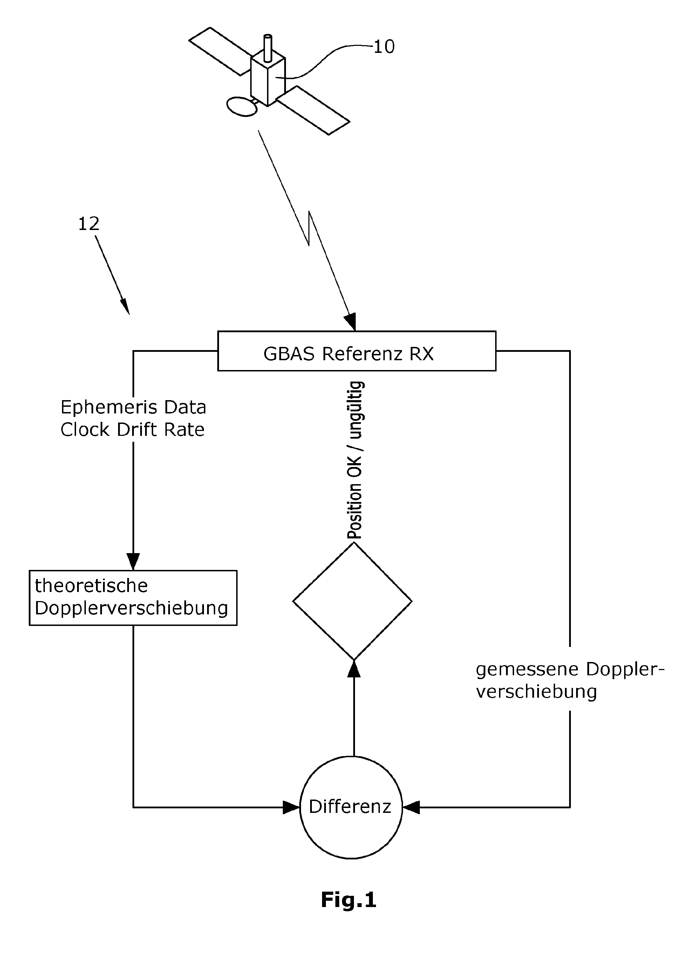

In Fig. 1 ist eine Ausführungsform des erfindungsgemäßen Verfahrens schematisch dargestellt. Bei Akquisition und Tracking des Satelliten wird die Dopplerverschiebung des GNNS-Signals durch den Empfänger gemessen, um die Signale dekodieren zu können. Die gemessene Dopplerverschiebung ist proportional zur Geschwindigkeitskomponente des Satelliten zum stationären Benutzer. Die gemessene Dopplerverschiebung entspricht dem rechten Pfeil der Fig. 1. Dieselbe Geschwindigkeitskomponente des Satelliten in Richtung des Benutzers kann auch mit Hilfe der empfangenen Ephemeridendaten bestimmt werden. Dies entspricht dem theoretischen Doppler auf der linken Seite der Fig. 1.

Durch einen Vergleich dieser beiden Werte kann Aufschluss über die Korrektheit der übermittelten Ephemeridendaten erlangt werden.

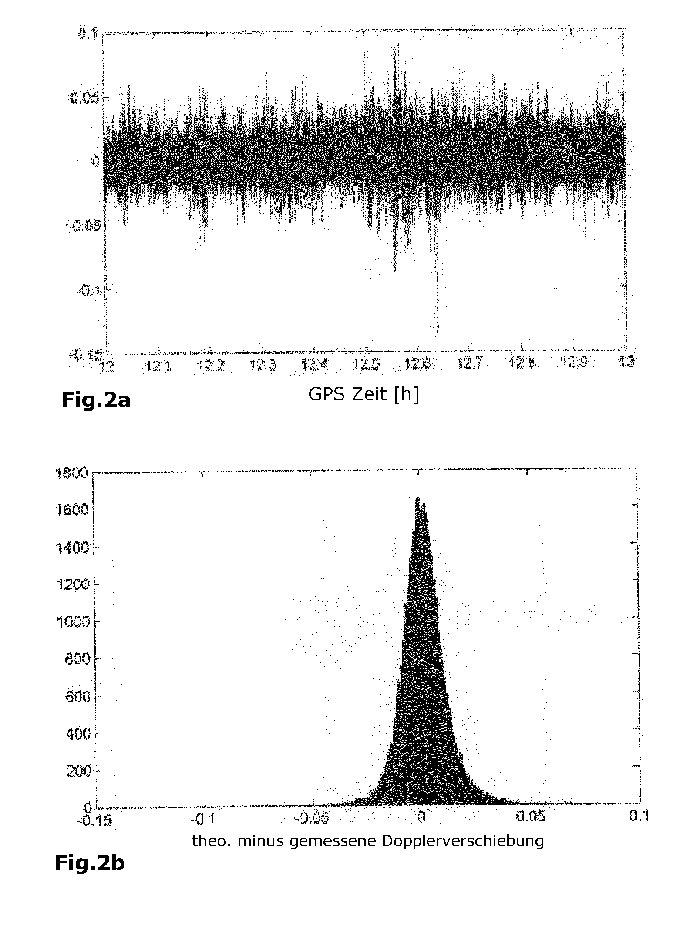

Die Differenz der beiden Werte (theoretische Dopplerverschiebung minus gemessener Dopplerverschiebung) ist in Fig. 2a dargestellt. Da Messungen immer mit Rauschen behaftet sind, ist es möglich, zur Detektion den Neyman-Pearson-Test zu verwenden (s. Fig. 2b). Hierbei wird, basierend auf einer Fehlalarmwahrscheinlichkeit und der Verteilung im fehlerfreien Fall, eine Detektionsschwelle bestimmt. Anders ausgedrückt wird durch diese Detektionsschwelle bestimmt, ab welcher Differenz zwischen der gemessenen und der theoretischen Dopplerverschiebung von fehlerhaften Ephemeridendaten ausgegangen wird.

## Patentansprüche

1. Verfahren zur Überprüfung der Richtigkeit von Ephemeridendaten eines Satelliten (10) mit den Schritten:
- Übermitteln der Ephemeridendaten von dem Satelliten (10) an einen Satellitenempfänger (12),
- Messen der Dopplerverschiebung des eingehenden Satellitensignals durch den Satellitenempfänger (12) und
- Überprüfen der Richtigkeit der vom Satelliten (10) übermittelten Ephemeridendaten durch Vergleich mit einer anhand der Dopplerverschiebung ermittelten Geschwindigkeit des Satelliten (10).

2. Verfahren nach Anspruch 1, **dadurch gekennzeichnet, dass** mehrere Satellitenempfänger (12) die Ephemeridendaten des Satelliten (10) empfangen und jeder der Satellitenempfänger (12) anhand der durch ihn gemessenen Dopplerverschiebung die Richtigkeit der empfangenen Ephemeridendaten überprüft.

3. Verfahren nach Anspruch 1 oder 2, **dadurch gekennzeichnet, dass** die Richtigkeit der empfangenen Ephemeridendaten bei jeder erneuten Übermittlung der Ephemeridendaten erneut überprüft wird.

4. Verfahren nach einem der Ansprüche 1 bis 3, **dadurch gekennzeichnet, dass** der oder die Satellitenempfänger (12) eine oder mehrere GBAS (Ground Based Augmentation System) Bodenstationen sind.

5. Verfahren nach einem der Ansprüche 1 bis 4, **dadurch gekennzeichnet, dass** die Position des oder der Satellitenempfänger (12) genau bekannt ist.

6. Verfahren nach einem der Ansprüche 1 bis 5, **dadurch gekennzeichnet, dass** aus den übermittelten Ephemeridendaten eine theoretische Dopplerverschiebung berechnet wird und diese berechnete Dopplerverschiebung mit der gemessenen Dopplerverschiebung des eingehenden Satellitensignals verglichen wird, wobei von fehlerhaften Ephemeridendaten ausgegangen wird, wenn die Differenz zwischen der berechneten und gemessenen Dopplerverschiebung einen festgelegten Schwellwert überschreitet.

7. Verwendung des Verfahrens nach einem der Ansprüche 1 bis 6 zur automatischen Landung eines Flugzeuges, wobei die GBAS-Bodenstationen für jeden Satelliten (10) die Abweichungen des von diesem Satelliten (10) empfangenen Positionssignals von der bekannten, tatsächlichen Position der GBAS-Bodenstation (12) berechnen und die Richtigkeit der von jedem Satelliten (10) empfangenen Ephemeridendaten durch jede GBAS-Bodenstation (12) gemäß dem Verfahren nach einem der Ansprüche 1 bis 5 überprüft wird.
